# FASCICULE DE BREVET EUROPEEN

(11) **EP 1 954 511 B1**
(45) Date de publication et mention de la délivrance du brevet: **03.02.2010**
(21) Numéro de dépôt: 06831111.7
(22) Date de dépôt: 14.11.2006
(51) Int. Cl.: B60F 1/04

(54) **LOCOTRACTEUR DE MANUTENTION FERROVIAIRE A FONCTIONS DE GUIDAGE ET DE TRACTION STRUCTURELLEMENT DISTINCTES**
KLEINLOK ZUM SCHIENENTRANSPORT FÜR STRUKTURELL VERSCHIEDENEN FÜHRUNGS- UND ZUGBETRIEB
LIGHT RAIL MOTOR TRACTOR FOR RAILWAY TRANSPORT FOR GUIDING AND STRUCTURALLY DISTINCT TRACTION OPERATIONS

(30) Priorité: 16.11.2005 FR 0511593
(43) Date de publication de la demande: 13.08.2008
(73) Titulaire: Ferway SA, 57190 Florange (FR)
(72) Inventeur: DAUSSE, Roger, F-57280 Hauconcourt (FR)
(74) Mandataire: Poupon, Michel
(86) Numéro de dépôt international: PCT/FR2006/002511
(87) Numéro de publication internationale: WO 2007/057552

(56) Documents cités:
- EP-A- 1 378 380
- DE-C1- 19 918 621
- FR-A- 793 220
- GB-A- 2 148 215
- GB-A- 2 183 567
- US-A- 4 174 667

## Description

L'invention concerne le domaine des locotracteurs de manutention ferroviaire.

Un locotracteur ferroviaire désigne dans l'état de la technique, soit un locotracteur classique (acier-acier), soit un locotracteur rail-route (gomme-acier).

Un locotracteur rail-route est un locotracteur de manutention équipé d'essieux ferroviaires pour une utilisation en mode rail, lesdits essieux étant articulés et relevables par rapport au châssis lorsque ledit tracteur doit rouler en mode route.

La mise en appui (on parle d'effort de délestage) des essieux ferroviaires de guidage sur les rails se fait par des vérins montés sur le châssis du tracteur.

Si l'effort de délestage est important, la fonction guidage est garantie mais au détriment de l'effort de traction puisque dans ce cas les essieux routiers sont "déchargés". Il s'agit alors de trouver un compromis satisfaisant entre la tenue sur rails du locotracteur et l'effort de traction nécessaire.

Ce compromis consiste à exploiter sur un engin moteur ferroviaire un contact "gomme-acier" au lieu de "acier-acier". Sur un même châssis, on trouve des roues motrices avec des pneus et des roues guides en acier, maintenues par des vérins qui permettent à l'engin de suivre les rails. Malheureusement, cette configuration mono-châssis est limitée car plus la pression exercée par les vérins sur les roues guides est importante, meilleure est la capacité de guidage sur les rails et moindre est le risque de déraillement. Toutefois, le fait d'appliquer une forte pression sur les vérins des roues guides tend à relever le mono-châssis et donc à diminuer l'effort moteur des roues motrices chaussées de pneus.

En outre, vouloir optimiser ces deux critères - tenue et traction - en mode rail en conservant ce principe cinématique obligerait à réaliser un locotracteur ayant un tonnage équivalent à un locotracteur selon l'art antérieur de 80 tonnes et 4 essieux. On dépasserait alors largement les limites de charge admises sur les essieux routiers équipés de pneumatiques. De plus, les qualités et fiabilité du guidage sur rail dépendent très fortement du comportement du châssis (oscillations, balancements... ), cet aspect étant pénalisant pour une double application rail-route.

L'état de la technique cite les documents D₁ : EP 1 378 380 A, D₂ :
FR 793 220 A, D₃ : US 4 174 667 A, D₄ : GB 2 148 215 A décrivant des matériels à fonctionnement rail, ou route, ou rail-route selon lequel la répartition des poids en mode rail-route est réalisée selon un rapport d'environ 1/5 sur les roues de guidage pour 4/5 sur les roues de traction.

L'objectif de l'invention est de s'affranchir de tout compromis entre la tenue sur rail et l'effort de traction nécessaire. La solution nécessite une modification de l'architecture des matériels, et va au-delà des idées reçues puisqu'on sépare en mode rail-route les 2 fonctions de guidage et de traction, et on supprime totalement ou au moins à 90 % la dépendance entre les poids contribuant à la fonction de traction et le poids contribuant à la fonction de guidage.

Cet objectif est atteint par l'invention qui consiste en un locotracteur de manutention pour un fonctionnement en mode rail ou en mode route, du type comportant des essieux de guidage en mode rail portant des roues guides en acier roulant sur deux rails, et des essieux routiers comportant des roues à pneus pouvant rouler sur route lorsque le tracteur est en mode route, et de même écartement que les roues-guide en acier, et un mode rail-route pour assurer des fonctions de guidage et/ou de traction sur rail, caractérisé en ce qu'il comporte une partie de guidage portée par les essieux de guidage et une partie de traction portée par les essieux équipés de roues à pneus, ces deux parties étant structurellement distinctes et liées entre elles par des liaisons mécaniques articulées, conçues de façon à garantir en mode rail-route l'indépendance totale ou quasi totale des masses en jeu sur les roues-acier et réalisant la fonction guidage, par rapport aux masses en jeu sur les roues-pneus et réalisant la fonction traction, par l'absence d'interférences parasitaires selon la direction verticale.

On comprendra mieux l'invention à l'aide de la description, ci-après faite en référence aux figures annexées suivantes :
- figure 1 : vue générale d'un locotracteur en mode rail-route à double châssis selon un exemple de réalisation de l'invention et représentée avec un seul moteur pour en faciliter la compréhension,
- figure 2 : schéma de principe, et en vue latérale, d'un locotracteur en mode rail-route à double châssis et à deux moteurs, en cas de déplacement sur rails des deux châssis.
- figure 3 : schéma de principe et en vue de dessus des moyens de liaisons et des châssis du locotracteur de la figure 2.

On précise ici que le locotracteur peut fonctionner en mode rail selon lequel le châssis équipé de pneus est totalement relevé, pour faciliter le transport par exemple, un mode route selon lequel le châssis équipé de roues acier est complètement relevé pour faciliter la manoeuvre par exemple, et un mode rail-route représenté sur les figures selon lequel les-deux châssis reposent sur les rails afin que le locotracteur assure sur rails des fonctions de guidage et/ou de traction.

Le principe de base d'un locotracteur (1) selon l'invention est de spécialiser les fonctions de guidage et de traction en distinguant dans le locotracteur une partie guidage (2) et une partie traction (3) de façon à rendre indépendantes en mode rail-route les masses en jeu pour le guidage et la traction. Il est alors nécessaire de créer entre ces parties des liaisons mécaniques (4) supprimant ou limitant entre lesdites parties toutes les interférences (c'est-à-dire des composantes de forces) parasitaires selon la direction verticale, rendant les deux parties flottantes l'une par rapport à l'autre.

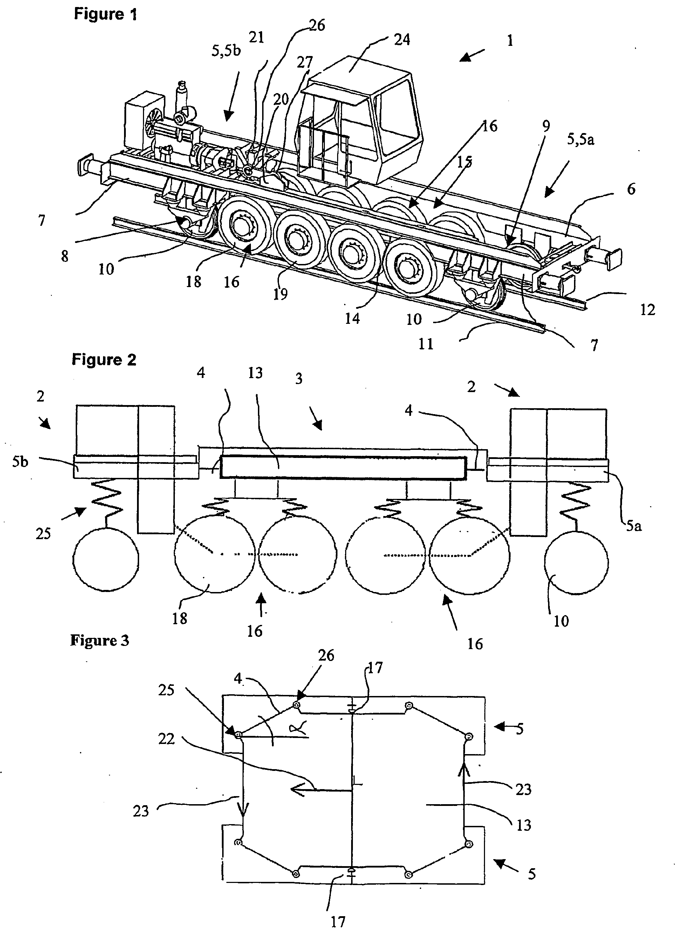

En se reportant aux schémas de principe des figures 1 à 3, on distingue :
- la partie de guidage (2) comportant un châssis de guidage (5) composé d'un châssis avant (5a) et d'un châssis arrière (5b) réunies par un longeron central et longitudinal ou par des longerons latéraux (6) et (7), chaque partie avant ou arrière comportant un essieu ou un bogie de guidage (8, 9) avec des roues-guides en acier (10) roulant sur deux rails (11, 12),
- la partie de traction (3) comportant un châssis moteur (13) par exemple comme sur la figure, plus étroit et plus court que le châssis de guidage (5), et dont les longerons latéraux (14, 15) ou bien un longeron central placés à un niveau plus bas que les longerons (6) et (7) et parallèlement à ceux-ci, portent des essieux moteurs (16), par exemple quatre, entraînant des trains de roues motrices (18) équipées de pneus (19) et roulant sur les mêmes rails (11, 12), et lesdits essieux-moteur étant placés entre un essieu de guidage avant (8) et un essieu de guidage arrière (9),

Les bielles de liaison (4) sont disposées par exemple horizontalement (voir figure 2) et par paire, à l'avant et à l'arrière du châssis moteur (13). Chaque bielle est montée d'une part par un système à rotule (25) sur une patte d'accrochage (20) du châssis moteur et d'autre part par un système à rotule (26) sur une interface (21) solidaire d'une partie avant ou arrière (5a) ou (5b) du châssis de guidage (5).

En variante, on peut disposer les bielles selon une direction inclinée par rapport à l'horizontale pour augmenter si nécessaire le couple transmissible au démarrage.

Selon le type d'utilisation, on peut prévoir de diminuer ou augmenter le nombre de bielles.

Pour concilier l'effort de traction et l'effort de dérive entre les deux châssis, efforts représentés respectivement par les flèches (22) et (23) (figure 3), et pour une application optimisée en efforts et contraintes, les inventeurs ont déterminé que les bielles (4), ou les projections desdites bielles sur un plan horizontal, doivent présente préférentiellement une inclinaison d'angle (α) par rapport à la direction du déplacement.

Préférentiellement cet angle (α) a une valeur optimale de 23° environ pour réaliser un auto-alignement des châssis.

Pour des utilisations à faible tonnage, et pour diminuer les coûts de fabrication, on peut très bien envisager un angle α de O°.

Dans le cas d'un dépassement du débattement angulaire des bielles rotulées ou pivotantes, on prévoit, préférentiellement, entre le châssis-moteur et le châssis-guide, une butée (17) de chaque côté et entre les longerons latéraux respectifs.

Dans le cas d'applications moins contraignantes d'autres types de liaison châssis-moteur/châssis-guide, peuvent être envisagées.

Selon l'invention, chaque châssis est équipé de masses adéquates, une pour assurer la traction, une autre pour assurer le guidage, complètement indépendantes l'une de l'autre.

On peut donc concilier un effort de traction important avec une capacité de guidage importante.

On peut également prévoir un système de levage à vérin qui lève soit le châssis moteur, soit le châssis guide, pour améliorer la manoeuvre routière ou, le transport, par exemple.

De plus, le locotracteur selon l'invention est d'une conception plus rustique qui permet de réduire les réglages, la complexité, par rapport aux locotracteurs existants. Il en résulte des gains notables sur les coûts de fabrication et le LCC (Life Cycle Cost).

Egalement, le locotracteur selon l'invention est de conception modulaire et peut se décliner sous la forme d'une famille en modifiant le nombre de roues acier et/ou pneumatique, le gabarit et/ou la masse des châssis, le type de motorisation, l'effort de traction, le nombre de cabines (24) portées par les longerons (6, 7) du châssis de guidage.

Par exemple, on peut prévoir des roues-guides de grand diamètre (supérieur à 800 mm) pour des applications à forte contrainte ou d'autres diamètres pour toute autre application avec des contraintes moins exigeantes. Elle peut être également équipée d'outils complémentaires tels que nacelles, grues, équipements de nettoyage, équipements de travaux, lutte anti-incendie, désherbant, purge de galeries, déminage, train de travaux, transport d'équipes d'intervention... Toutes les roues peuvent être suspendues par exemple par des suspensions (28) du type chevrons ou des suspensions de type ressorts coniques en acier/élastomère à lames traditionnelles.

Parmi les avantages, particularités ou résultats de l'invention, on note non limitativement que :
- on concilie les deux critères tenué et traction tout en les maximisant,
- modularité sur le nombre d'essieux moteurs,
- le fait d'augmenter le nombre d'essieux routiers réduit la charge à l'essieu et à la roue (fiabilités et durées de vie augmentées),
- motricité importante du fait du contact pneu/rail,
- la force motrice passe par un contact "pneu-rail" et non "roue métallique-rail" comme sur une locomotive traditionnelle. Ainsi, le coefficient d'adhérence passe à 0,7-0,5 (contact gomme-acier), au lieu de 0,30-0,35 (contact acier-acier). Comme l'effort de traction est égal à la masse de la locomotive multipliée par le coefficient d'adhérence, la locomotive selon l'invention permet, à masse égale, de disposer d'un effort de traction largement supérieur, donc de déplacer davantage de wagons en une seule fois,
- augmentation du taux d'utilisation de l'engin du fait de la modularité de sa conception (réparation par simple échange de module),
- le fait d'avoir diminué la charge à la roue pneumatique ouvre des perspectives intéressantes en ce qui concerne le respect du gabarit bas (en mode rail) (largeur des roues imposée à 167 mm maxi > "roues galettes"). On peut en effet envisager la conception de telles roues, la contrainte restant l'inscription en courbe,
- plus d'efforts de délestage à réguler et à surveiller,
- plus de direction à régler, aligner et caler,
- fonction guidage améliorée du fait de monter des roues guides de grand diamètre,
- la locomotive selon l'invention pourra être adaptée en tandem avec des locotracteurs traditionnels en qualité d'éléments d'appoint au démarrage. En effet, c'est au démarrage, à vitesse nulle, qu'existe le besoin maximal en effort de traction pour mouvoir une rame de wagon sans faire patiner les roues de la locomotive,
- on conserve les fonctions de bases telles que l'antipatinage, la possibilité de remorquer la machine, le double-poste de conduite (cabine de grandes dimensions),
- A titre d'exemple, on donne les valeurs de réalisation suivantes :
   - α = 23°,
   - effort moteur (22) = 30 000 daN,
   - force de dérive (23) = 1200 daN,
   - pour un déplacement sur rail à vitesse maximale de 30 km/heure et un effort au crochet de 30.000 daN et roues acier de diamètre 920 mm, le châssis moteur étant lesté à 30 tonnes, le wagon pouvant être également lesté à 30 tonnes,
   - le châssis de guidage peut être lesté jusqu'à 40 tonnes, chacun des essieux-acier acceptant dans la norme actuelle 20 tonnes de charge par essieu.
   - il est possible, avec le locotracteur selon l'invention, d'avoir des vitesses de déplacements supérieures à ce qui se pratique actuellement. En effet, la fonction guidage étant plus fiable, on peut se permettre d'aller plus vite en mode rail-route c'est-à-dire à 40 à 60 km/h au moins, et voire davantage, au lieu de 30 à 40 km/h avec les locotracteurs de l'état de la technique.

Bien entendu la bielle de liaison à double rotule d'articulation a été décrite à titre d'exemple non limitatif, toute autre liaison mécanique, (à vérin par exemple) équivalente supprimant les composantes de forces verticales et supprimant la dépendance entre le poids contribuant à la fonction traction et le poids contribuant à la fonction guidage, peut convenir.

## Revendications

1. Locotracteur (1) de manutention pour un fonctionnement en mode rail ou en mode route, du type comportant des essieux de guidage en mode rail portant des roues guides en acier (10) roulant sur deux rails (11, 12), et des essieux routiers (16) comportant des roues à pneu (19) pouvant rouler sur route lorsque le tracteur (1) est en mode route, et de même écartement que les roues-guides en acier (10), et un mode rail-route pour assurer des fonctions de guidage et de traction sur rail, **caractérisé en ce qu'**il comporte une partie de guidage (2) portée par les essieux de guidage (8,9) et une partie de traction (3) portée par les essieux (16) équipés de roues pneumatiques (19), ces deux parties (2, 3) étant structurellement distinctes et liées entre elles par des liaisons mécaniques articulées (4) conçues de façon à garantir en mode rail-route l'indépendance des masses en jeu sur les roues-acier (10) et réalisant la fonction guidage, par rapport aux masses en jeu sur les roues-pneus (19) et réalisant la fonction traction, par l'absence d'interférences ou composantes de forces parasitaires selon la direction verticale.

2. Locotracteur de manutention selon la revendication 1, **caractérisé en ce que** la partie de guidage (2) comporte un châssis de guidage (5) composé d'un châssis avant (5a) et d'un châssis arrière (5b) réunis par un ou des longerons (6) et (7) chaque partie avant ou arrière comportant un essieu ou un bogie de guidage (8, 9) avec des roues-guides en acier (10) roulant sur deux rails (11, 12),

3. Locotracteur de manutention selon la revendication 1 à 2, **caractérisé en ce que** la partie de traction (3) comporte un châssis-moteur (13) et dont le ou les longerons longitudinaux (14, 15) placés à un niveau plus bas que le ou les longerons (6) et (7) et parallèlement à ceux-ci portent des essieux-moteurs (16), entraînant des trains de roues motrices (18) équipés de pneus (19) et roulant sur mes mêmes rails (11, 12), et lesdits essieux-moteur (16) étant placés entre un essieu ou bogie de guidage avant (8) et un essieu ou bogie de guidage arrière (9),

4. Locotracteur de manutention selon les revendications 2 et 3, **caractérisé en ce que** les liaisons mécaniques articulées sont des bielles de liaisons (4), à l'avant et à l'arrière du châssis-moteur (13), chaque bielle étant montée d'une part par un système pivotant sur une patte d'accrochage (20) du châssis moteur (13) et d'autre part par un système à rotule (26) sur une interface (21) solidaire d'une partie avant ou arrière (5a) ou (5b) du châssis de guidage (5).

5. Locotracteur de manutention selon la revendication 4, **caractérisé en ce que** les bielles (4) présentent une inclinaison d'angle (α) par rapport à la direction du déplacement.

6. Locotracteur de manutention selon la revendication 5, **caractérisé en que** l'angle (α) vaut sensiblement 23°.

7. Locotracteur de manutention selon l'une des revendications 2 à 6, **caractérisé en qu'**on prévoit entre le châssis-moteur (13) et le châssis-guide (5), une butée (17) de chaque côté.

## Claims

1. Transport light rail motor tractor (1) which is able to operate in a rail or road mode, of the type comprising guiding axles (8, 9) in rail mode supporting steel guide wheels (10) running on two rails (11, 12), and road axles (16) provided with wheels with tyres (19), which are used for travelling on the road when the tractor (1) operates in road mode, and have the same gauge as the steel guide wheels (10), and a rail-road mode for ensuring the guiding and traction functions on rail, **characterised in that** it comprises a guiding part (2) supported by the guiding axles (8, 9), and a traction part (3) supported by the axles (16) provided with pneumatic wheels (19), said two parts (2, 3) being structurally distinct and connected to each other by articulated mechanical connections (4), designed in order to guarantee in a rail-road mode the independence of the masses in play on the steel wheels (10) and performing the guiding function, in relation to the masses in play on the wheels with tyres (19) and performing the traction function, with the absence of interference or parasitic force components in vertical direction

2. Transport light rail motor tractor according to claim 1, **characterised in that** guiding part (2) comprises a guiding chassis (5) consisting of a front chassis (5a) and a rear chassis (5b) joined together by one side member or members (6) and (7), each front or rear part comprising a guiding axle or bogie (8, 9) with steel wheel guides (10) rolling on two rails (11, 12).

3. Transport light rail motor tractor according to claim 1 to 2, **characterised in that** the traction part (3) comprises a motor chassis (13) and the longitudinal side member or members (14, 15) of which are placed at a lower level than the side member or members (6) and (7) and parallel to the latter support driving axles (16), which drive the motor wheel and axle sets (18) equipped with tyres (19) and rolling on the same rails (11, 12), and the said driving axles (16) are placed between a front (8) guiding axle or bogie and a rear (9) guiding axle or bogie.

4. Transport light rail motor tractor according to claims 2 and 3, **characterised in that** the articulated mechanical links are connecting rod links (4), at the front and rear of the motor chassis (13), each connecting rod being mounted on the one hand by a pivoting system onto a securing attachment (20) of the motor chassis (13) and on the other hand by a ball joint system (26) onto an interface (21) joined to a front or rear part (5a) or (5b) of the guiding chassis (5).

5. Transport light rail motor tractor according to claim 4, **characterised in that** the connecting rods (4) have an angle of inclination (α) relative to the direction of displacement.

6. Transport light rail motor tractor according to claim 5, **characterised in that** the angle (α) is approximately 23°.

7. Transport light rail motor tractor according to any one of claims 2 to 6, **characterised in that** between the motor chassis (13) and the guide chassis (5) a stop (17) is provided on each side.

## Patentansprüche

1. Wartungszugmaschine (1) für einen Betrieb im Schienenmodus oder für einen Betrieb im Straßenmodus mit Führungsachsen im Schienenmodus, die Führungsräder aus Stahl (10) aufweisen, die auf zwei Schienen (11, 12) rollen, und mit Straßenachsen (16), die über Räder mit Luftbereifung (19) verfügen, die auf einer Straße rollen können, wenn die Zugmaschine (1) im Straßenmodus ist, und die den gleichen Abstand wie die Führungsräder aus Stahl (10) aufweisen, und für einen Schienen-Straßenmodus, um die Führungsfunktion und die Zugfunktion auf Schienen sicherzustellen, **dadurch gekennzeichnet, dass** sie ein durch die Führungsachsen (8, 9) getragenes Führungsteil (2) und ein durch die mit den Rädern mit Luftbereifung (19) versehenen Achsen (16) getragenes Zugteil (3) aufweist, wobei diese beiden Teile (2, 3) strukturell unterschiedlich und durch gelenkige mechanische Verbindungen (4) miteinander verbunden sind, die so ausgebildet sind, dass sie im Schienen-Straßenmodus die Unabhängigkeit der an den Stahlrädern (10) in Betrieb befindlichen Massen sicherstellen und die die Führungsfunktion gegenüber den an den Rädern mit Luftbereifung (19) in Betrieb befindlichen Massen sowie die Zugfunktion durch das Fehlen von Wechselwirkungen oder Zusammenwirken von parasitären Kräften entlang der vertikalen Richtung bewirken.

2. Wartungszugmaschine nach Anspruch 1, **dadurch gekennzeichnet, dass** das Führungsteil (2) ein Führungsfahrgestell (5) aufweist, das über ein vorderes Fahrgestell (5a) und über ein hinteres Fahrgestell (5b) verfügt, die durch einen oder mehrere Längsträger (6) und (7) verbunden sind, wobei jedes Teil vorne oder hinten eine führungsachse oder ein Führungsdrehgestell (8, 9) mit Führungsrädern aus Stahl (10) aufweist, die auf zwei Schienen (11, 12) rollen.

3. Wartungszugmaschine nach den Ansprüchen 1 bis 2, **dadurch gekennzeichnet, dass** das Zugteil (3) über einen Fahrgestellantrieb (13) verfügt, wobei dessen einer oder mehrere in Längsrichtung ausgerichtete(r) Längsträger (14, 15), die niedriger als der oder die Längsträger (6) und (7) angeordnet sind sowie parallel zu denen sind, die Antriebsachsen (16) aufweisen, Züge mit mit Luftbereifung (19) versehenen und auf denselben Schienen (11, 12) rollenden Antriebsrädern (18) antreiben und dass die Antriebsachsen (16) zwischen einer vorderen Führungsachse oder einem vorderen Führungsdrehgestell (8) und einer hinteren Führungsachse oder einem hinteren Führungsdrehgestell (9) angeordnet sind.

4. Wartungszugmaschine nach den Ansprüchen 2 und 3, **dadurch gekennzeichnet, dass** die gelenkigen mechanischen Verbindungen vor und hinter dem Fahrgestellantrieb (13) angebrachte Verbindungsstangen (4) sind, wobei jede Stange zum einen durch ein schwenkbares System an einer Einhänglasche (20) des Fahrgestellantriebs (13) und zum anderen durch ein Kugelgelenksystem (26) an einer einstückig mit einem vorderen oder hinteren Teil (5a) oder (5b) des Führungsfahrgestells (5) ausgebildeten Schnittstelle (21) befestigt ist.

5. Wartungszugmaschine nach Anspruch 4, **dadurch gekennzeichnet, dass** die Stangen (4) eine Winkelschrägstellung (α) in Bezug auf die Verschieberichtung aufweisen.

6. Wartungszugmaschine nach Anspruch 5, **dadurch gekennzeichnet, dass** der Winkel (α) etwa 23° beträgt.

7. Wartungszugmaschine nach einem der Ansprüche 2 bis 6, **dadurch gekennzeichnet, dass** zwischen dem Fahrgestellantrieb (13) und der Fahrgestellführung (5) auf jeder Seite ein Anschlag vorgesehen ist.
